Europäisches Patentamt

(19) European Patent Office

Office européen des brevets

(11) Veröffentlichungsnummer : **0 016 119**
**B1**

(12) # EUROPÄISCHE PATENTSCHRIFT

(45) Veröffentlichungstag der Patentschrift :
19.05.82

(51) Int. Cl.³ : **H 02 G   3/22**

(21) Anmeldenummer : 79900822.2

(22) Anmeldetag : 04.07.79

(86) Internationale Anmeldenummer :
PCT/DE 79/00068

(87) Internationale Veröffentlichungsnummer :
WO WO/80002 (07.02.80 Gazettee 80/03)

(54) **VERFAHREN ZUR HERSTELLUNG WASSERDICHTER UND FEUERFESTER DURCHFÜHRUNGEN FÜR KABEL.**

(30) Priorität : 07.07.78 DE 2829887
23.10.78 DE 2846061
02.03.79 DE 2908238
30.05.79 DE 7915639 U

(43) Veröffentlichungstag der Anmeldung :
01.10.80 (Patentblatt 80/20)

(45) Bekanntmachung des Hinweises auf die Patenterteilung : 19.05.82 Patentblatt 82/20

(84) Benannte Vertragsstaaten :
FR

(56) Entgegenhaltungen :
AU - B - 471908
DE - A - 2 162 251
DE - A - 2 632 325
FR - A - 1 180 469
FR - A - 2 339 805

(73) Patentinhaber : Licentia Patent-Verwaltungs-GmbH
Theodor-Stern-Kai 1
D-6000 Frankfurt/Main 70 (DE)

AEG ISOLIER- UND KUNSTSTOFF GMBH
Falderbaumstrasse 5
D-3500 Kassel 1 (DE)

(72) Erfinder : BARGSTEN, Günther
Fabriciusstrasse 47
D-2000 Hamburg 71 (DE)
Erfinder : RAABE, Bruno
Rasenallee 41 b
D-3500 Kassel (DE)

(74) Vertreter : Schickle, Gerhard, Dipl.-Ing. et al
Licentia Patent-Verwaltungs-GmbH Theo-
dor-Stern-Kai 1
D-6000 Frankfurt/Main 70 (DE)

« Verfahren zur Herstellung wasserdichter und feuerfester Durchführungen für Kabel »

## Technisches Gebiet

Die Erfindung bezieht sich auf ein Verfahren zur Herstellung wasserdichter und feuerfester Durchführungen für Kabel durch Decken und Wände unter Verwendung eines Hohlkörpers vorbestimmter Länge, der nach Durchziehen aller Kabel mit einer aushärtbaren Gießmasse ausgefüllt wird.

## Zugrundeliegender Stand der Technik

Es sind zur Durchführung von Kabeln und Leitungen durch Decken und Wände von Gebäuden und an Bord von Schiffen Einrichtungen bekannt, die aus einem Kabelkasten bestehen, durch den die Kabel hindurchgezogen werden. Nach dem Durchziehen sämtlicher Kabel durch den Kabelkasten, der einen rechteckigen oder runden Querschnitt besitzen kann, werden dessen Stirnflächen mit einer Dichtmasse verschlossen und durch auf der Oberfläche befindliche Einfüllstutzen flüssiges aushärtbares Gießharz in das Innere des Kabelkastens gegossen, bis dieser vollständig ausgefüllt ist. Beispielsweise wird auf das Prospektblatt der AEG mit dem Titel « Schottdurchführungen » mit der Nummer 0806.611 E 23/V 1165 hingewiesen.

Ein Mangel dieser an sich in der Praxis bewährten Kabeldurchführung besteht darin, daß die Dichtmasse nicht so in alle Räume zwischen den einzelnen Kabeln eingebracht werden kann, daß nicht doch ein Teil des sehr flüssigen Gießharzes vor dem Aushärten durch die Zwischenräume nach außen abfließt.

Um diesen Mangel zu beheben, ist bereits vorgeschlagen worden, vergleiche DE-AS 27 27 996, unmittelbar vor den Stirnflächen der Wanddurchführung jedes Kabel mit einem Abstandsstück aus verformbarem Schaumstoff zu umgeben, dieses so gebildete Paket mittels einer Spanneinrichtung so zusammenzupressen, daß die Hohlräume zwischen den Kabeln dicht verschlossen sind. Die Stirnflächen der Durchführung werden in bekannter Weise mit der Dichtmasse verschlossen. Wenn auch mit dieser Durchführung das Ausfließen des Gießharzes verhindert werden kann, so hat sich bei den oft beschränkten Platzverhältnissen an Bord von Schiffen die Benutzung des Spannwerkzeuges als außerordentlich schwierig erwiesen.

## Offenbarung der Erfindung

Es ist daher Aufgabe der Erfindung, ein Verfahren anzugeben, mit dem die vorbeschriebenen Nachteile bei Kabeldurchführungen der genannten Art vermieden werden und mit dem wasser-, gasdichte und feuerfeste Durchführungen ohne besondere Werkzeuge rasch hergestellt werden können.

Zur Lösung dieser Aufgabe wird erfindungsgemäß vorgeschlagen, daß zum Aufbau der Stirnwände des Hohlkörpers ein saug- und quellfähiger Werkstoff verwendet wird, mit dem die Kabel umschlossen und auf Abstand gegeneinander und gegen den Hohlkörper gehalten werden, und daß die äußeren Flächen der Stirnwände vor dem Auffüllen des Hohlkörpers mit der Gießmasse mit einer Flüssigkeit vorbehandelt werden, mit der außer einer raschen Quellwirkung auch eine Verfestigung des Werkstoffes bewirkt wird.

Die Vorteile, die das Verfahren nach der Erfindung aufweist, bestehen insbesondere darin, daß gegenüber der vorgeschlagenen Kabeldurchführung keine Dichtungsmasse erforderlich ist, um die Stirnflächen der Durchführung ausreichend abzudichten. Durch die Kombination des saug- und quellfähigen Werkstoffes und der feuerfesten Gießmasse wird gleichzeitig sowohl ein dichter als auch ein feuerfester Abschluß der Durchführung erzielt.

Neben diesen Vorteilen wird eine wesentliche Material- und Arbeitszeitersparnis, Montagefreundlichkeit und ein geringer technischer Aufwand sowie eine Unabhängigkeit von der Form der Durchführung und der Kabeldurchmesser erreicht.

## Kurze Beschreibung der Zeichnung

In der Zeichnung sind Beispiele für eine Einrichtung zur Durchführung des Verfahrens dargestellt. Es zeigt

Figur 1 ein Werkstoffstück mit den Ausgangs- und Endabmessungen,

Figur 2 eine abgerundete Durchführung mit dem Aufbau einer Stirnwand und,

Figur 3 die gleiche Durchführung mit der geschlossenen Stirnwand,

Figur 4 eine Stirnwand aus Formteilen.

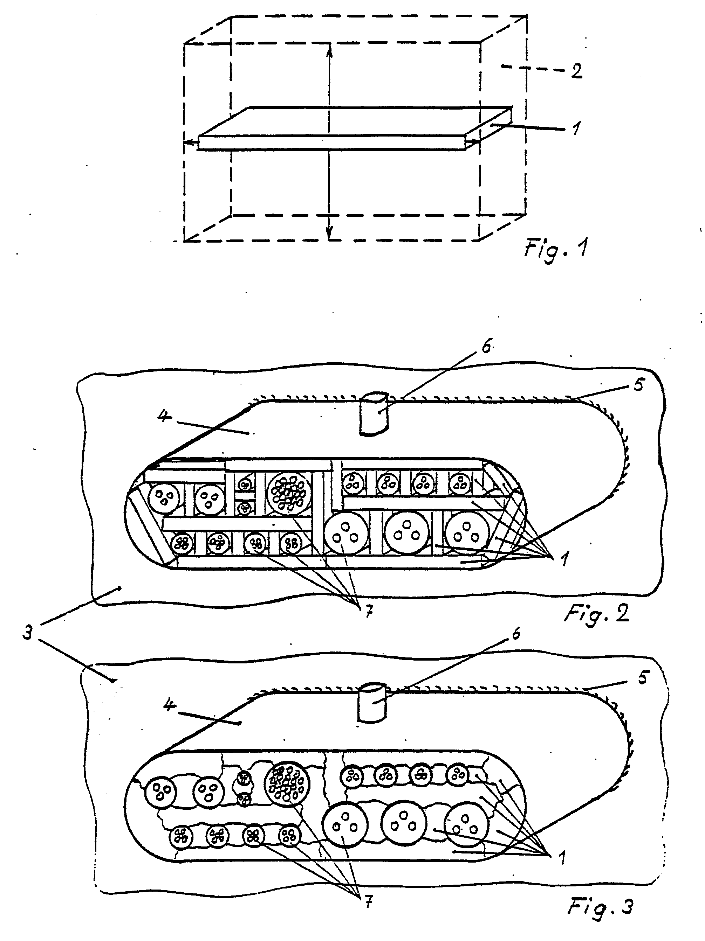

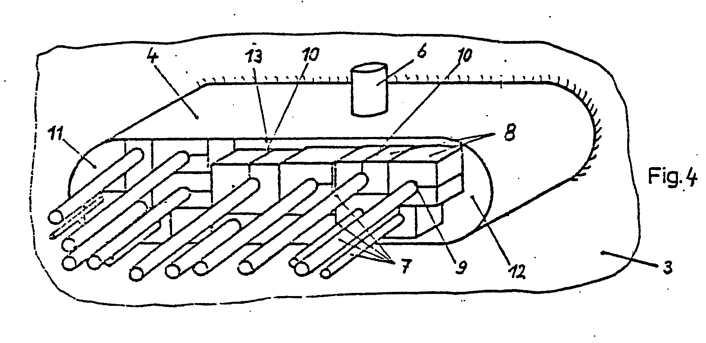

Das aus Viskose hergestellte Werkstoffstück (Quellmodul 1) hat etwa die in Figur 1 in vollen Linien gezeichnete Form und Größe. Das Ausgangsmaterial dieses Werkstoffes ist während der Herstellung gepresst worden, (gegebenenfalls in zwei senkrecht zueinander Liegenden Ebenen mit unterschiedlichen Drücken). Nach Befeuchten des Werkstoffstückes mit einer Flüssigkeit dehnt es sich in den mit Pfeilen bezeichneten Richtungen unterschiedlich stark aus und kann etwa die gestrichelt dargestellte endgültige Form 2 einnehmen. Werkstoffstücke in der ursprünglichen Form (nachfolgend Quellmodule genannt) werden zur Verpackung der Stirnwände von Kabeldurchführungen verwendet, wie sie anhand der Figuren 2 und 3 nachfolgend beschrieben werden.

Das in Fig. 1 dargestellte Quellmodul 1 kann kammartige Einschnitte aufweisen, die in der Zeichnung nicht enthalten sind.

In den Figuren 2 und 3 ist mit 3 eine Trennfläche an Bord eines Schiffes bezeichnet. Mit der Trennfläche 3 ist ein abgerundeter Hohlkörper 4 als Durchführung mittels Schweissung 5 fest verbunden. An der oberen Fläche der Kabeldurchführung ist ein Einfüllstutzen 6 angeordnet, der zum Einfüllen der Vergußmasse dient, die nach Verschließen der Stirnwände der Durchführung das Innere der Durchführung ausfüllt. Ein weiterer Stutzen befindet sich auf derselben Fläche hinter der Trennfläche als Entlüftung.

Durch die Durchführung (Hohlkörper 4) sind die von dem einen Raum in den benachbarten zu verlegenden Kabel und Leitungen hindurchgeführt. Sie sind mit den Bezugszeichen 7 versehen. Um ein Ausfließen der flüssigen Gießmasse zu verhindern, müssen die Stirnwände sorgfältig verschlossen werden.

Dies geschieht, indem die Stirnwand mit den Quellmodulen 1, wie in Figur 2 dargestellt, zellenförmig um die Kabel von unten nach oben aufgebaut wird. Jedes Kabel und jede Leitung wird durch waagerecht und senkrecht angeordnete Quellmodule 1 umschlossen, deren Quellrichtungen immer quer zur Durchführung (Hohlkörper 4) zeigen. Gleichzeitig sind durch diese Anordnung alle erforderlichen Abstände gewährleistet. Kammartige Quellmodule 1 werden dabei so eingebracht, daß die Zähne in das Innere der Durchführung gerichtet sind. Je nach Größe der zwischen den Kabeln oder zwischen Kabeln und Wandung verbleibenden Öffnungen können auch mehrere Werkstoffstücke nebeneinander oder übereinander gelegt werden.

Nachdem der zellenförmige Aufbau der Stirnwand abgeschlossen ist, wird er mit einer Flüssigkeit besprizt, die die Quellmodule aufquellen läßt und damit die Stirnwand schließt, wie in Figur 3 dargestellt ist. Unter Verwendung einer besonderen Flüssigkeit, wie beispielsweise Kieselsole, wird die Stirnwand gleichzeitig feuerfest. Das Aufquellen verläuft sehr rasch und bildet in wenigen Minuten eine sicher verschlossene Stirnwand. Wenn die gegenüberliegende Stirnwand in der gleichen Weise verschlossen ist, kann durch den Einfüllstutzen 6 die Vergußmasse eingefüllt und damit der Innenraum der Kabeldurchführung (Hohlkörper 4) ausgefüllt werden, ohne daß die Gefahr besteht, daß die Vergußmasse aus den Stirnwänden austritt.

Gemäß Figur 4 ist eine Kabeldurchführung (Hohlkörper 4) mit ovalem Querschnitt durch eine Trennfläche 3 hindurchgeführt. Beide Teile sind durch eine Schweißung 5 wasser- und gasdicht miteinander verbunden. Durch das Innere der Kabeldurchführung sind die Kabel und Leitungen 7 hindurchgeführt.

An der Oberfläche der kabeldurchführung befindet sich ein Einfüllstutzen 6 für die flüssige Gießmasse. Auf der Rückseite der Trennfläche 3 ist die Kabeldurchführung in gleicher Weise ausgebildet. In der Ebene der Stirnfläche sind die Kabel und Leitungen 7 in Formteilen 8 aus saugfähigem Werkstoff gelagert. Diese Werkstoffteile können etwa quadratischen Querschnitt aufweisen. Sie sind mit einer Bohrung 9, die an den Durchmesser des Kabels angepasst ist und mit einem Längsschlitz 10 versehen, durch den das Kabel bequem in das Formteil eingelegt werden kann.

Die nach Einlegen aller Kabel in die Formteile in der Stirnfläche verbleibenden Lücken 11, 12 und 13 werden durch etwa an die Form angepasste Werkstoffstücke ausgefüllt. Wenn jetzt alle Hohlräume und Lücken, auch zwischen den Formteilen 8, ausgefüllt sind, steht das gesamte Werkstoffpaket etwas unter Spannung. Im Anschluß an diesen Arbeitsgang kann die flüssige feuerfeste Gießmasse durch den Einfüllstutzen 6 in das Innere der Kabeldurchführung (Holraum 4) gegossen werden. Die Gießmasse dringt rasch in den prösen, saugfähigen Werkstoff ein und wird fest, bevor die äußere Schicht der Werkstoffformteile getränkt ist. Nach dem Ausfüllen der Kabeldurchführung und dem Aushärten der Gießmasse ist diese so innig mit den Wandungen der Durchführung und den Mänteln der Kabel und Leitungen verbunden, daß eine gas- und wasserdichte sowie feuerfeste Kabeldurchführung erzielt wird.

Um die Sicherheit und Dichtigkeit des stirnseitigen Abschlusses der Kabeldurchführung mit Hilfe der Werkstoffteile zu gewährleisten und zu erhöhen, kann es sinnvoll sein, in den Werkstoff zum Verschließen der Stirnwände der Durchführungen während seiner Herstellung eine Komponente der Gießmasse einzulagern, um mit dem Auffüllen des Hohlkörpers mit der flüssigen Gießmasse eine rasche Verfestigung der Stirnwand herbeizuführen. Die Oberfläche der Stirnwände können mit der flüssigen Komponente der Gießmasse vorbehandelt werden. Diese Vorbehandlung der Stirnwände hat den Vorteil, daß der saug- und quellfähige Werkstoff sich derart ausdehnt, daß durch ihn auch die kleinsten Öffnungen zwischen den Kabeln abgedichtet werden. Dieser Effekt ist so wirksam, daß unmittelbar nach der Vorbehandlung das Auffüllen der Durchführung mit der flüssigen Gießmasse erfolgen kann.

Bester Weg zur Ausführung der Erfindung

Bei dem Verfahren zum Verschließen von Hohlkörpern, die als Durchführungen von Kabeln und Leitungen in Trennflächen, vorzugsweise Decken und Wände, insbesondere auf Schiffen, eingebaut sind, und zur Aufnahme einer erhärtenden Gießmasse dienen, bestehen die Stirnwände des Hohlkörpers 4 aus einzelnen Stücken eines saug- und quellfähigen Werkstoffes, die so eingefügt sind, daß alle Kabel und Leitungen 7 auf Abstand gegeneinander und gegen den Hohlkörper 4 gehalten werden. Nach Befeuchten der Stücke mit einer Flüssigkeit werden, unter Ausnutzung bevorzugter Quellrichtungen, alle verbliebenen Öffnungen innerhalb der Stirnwand verschlossen, und danach die Durchführung (Hohlkörper 4) mit der Gießmasse ausgefüllt.

Gewerbliche Verwertbarkeit

Die nach dem Verfahren hergestellte Durchführung ist vorzugsweise im Schiffbau einsetzbar und bietet gegenüber allen herkömmlichen Verfahren große wirtschaftliche und praktische Vorteile.

## Ansprüche

1. Verfahren zur Herstellung wasserdichter und feuerfester Durchführungen für Kabel (7) durch Decken und Wände unter Verwendung eines Hohlkörpers (4) vorbestimmter Länge, der nach Durchziehen aller kabel (7) mit einer aushärtbaren Gießmasse ausgefüllt wird, dadurch gekennzeichnet, daß zum Aufbau der Stirnwände des Hohlkörpers (4) ein saug- und quellfähiger Werkstoff (1) verwendet wird, mit dem die Kabel (7) umschlossen und auf Abstand gegeneinander und gegen den Hohlkörper (4) gehalten werden, und daß die äußeren Flächen der Stirnwände vor dem Auffüllen des Hohlkörpers (4) mit der Gießmasse mit einer Flüssigkeit vorbehandelt werden, mit der außer einer raschen Quellwirkung auch eine Verfestigung des Werkstoffes bewirkt wird.

2. Verfahren nach Anspruch 1, dadurch gekennzeichnet, daß der Werkstoff (1) nach der Behandlung mit der Flüssigkeit feurfest wird.

3. Verfahren nach Anspruch 2, dadurch gekennzeichnet, daß als Flüssigkeit Kieselsole verwendet wird.

4. Verfahren nach Anspruch 1, dadurch gekennzeichnet, daß die Stirnwände aus einem saugfähigen Werkstoff (1) aufgebaut werden.

5. Verfahren nach Anspruch 4, dadurch gekennzeichnet, daß aus dem saugfähigen Werkstoff (1) Formteile (8) gebildet werden, die die Kabel (7) umschließen und daß in die verbleibenden Lücken Stücke desselben Werkstoffes eingepasst werden.

6. Verfahren nach Anspruch 2, dadurch gekennzeichnet, daß zur Befeuchtung der Stirnwände die flüssige Komponente der Gießmasse verwendet wird.

7. Verfahren nach Anspruch 1, dadurch gekennzeichnet, daß in den Werkstoff (1) während seiner Herstellung eine Komponente der Gießmasse eingelagert wird.

8. Verfahren nach Anspruch 7, dadurch gekennzeichnet, daß der Werkstoff (1) mit der trockenen Komponente der Gießmasse durchsetzt wird.

9. Verfahren nach Anspruch 1, dadurch gekennzeichnet, daß als Werkstoff (1) Viskose verwendet wird, die in senkrecht zueinander liegenden Richtungen verschieden stark gepreßt wird.

10. Verfahren nach Anspruch 9, dadurch gekennzeichnet, daß der Werkstoff (1) in vorbestimmten Längen verwendet wird, wobei die Werkstoffteile durch Einschnitte kammartig ausgebildet werden.

## Claims

1. Process for manufacturing and non inflammable traverse sleeves for cables through ceilings and walls with the use of a hollow body of predetermined length, which is filled out by a hardenable casting mass after all cables have been pulled through, characterised thereby, that an absorbent and swellable material (1), by which the cables (7) are enclosed and held at a spacing from one another and from the hollow body (4), is used for the build-up of the end walls of the hollow body (4) and that the outer surfaces of the end walls are pretreated with a liquid, by which also a solidifying of the material is effected apart from a rapid swelling effect, before the hollow body (4) is filled up by the casting mass.

2. Process according to claim 1, characterized thereby, that the material (1) becomes non inflammable after the treatment with the liquid.

3. Process according to claim 2, characterized thereby, that silica sol is used as liquid.

4. Process according to claim 1, characterized thereby, that the end walls are built up of an absorbent material.

5. Process according to claim 4, characterized thereby, that moulded parts, which enclose the cables, are formed of the absorbent material and that pieces of the same material are fitted into the remaining gaps.

6. Process according to claim 2, characterized thereby, that the liquid component of the casting mass is used for the moistening of the end walls.

7. Process according to claim 1, characterized thereby, that a component of the casting mass is embedded in the material during its manufacture.

8. Process according to claim 7, characterized thereby, that the material is permeated by the dry component of the casting mass.

9. Process according to claim 1, characterized thereby, that viscose, which is differently strongly pressed in direction lying perpendicular to each other, is used as material.

10. Process according to claim 9, characterized thereby, that the material is used in predetermined lengths, wherein the material parts (1) are developed in comb manner by incisions.

## Revendications

1. Procédé de fabrication de douilles de traversée étanches et incombustibles pour câbles, ces douilles passant à travers des plafonds et des parois, tandis qu'elles sont réalisées en utilisant un corps creux d'une longueur prédéterminée que l'on remplit d'une masse de coulée durcissable après y avoir tiré tous les câbles, caractérisé en ce que, pour réaliser les parois frontales du corps creux (4), on utilise une matière première absorbante et susceptible de gonfler (1( par laquelle les câbles (7) sont entourés et maintenus à l'écart l'un de l'autre et contre le corps creux (4) tandis que, avant de remplir ce dernier avec la masse de coulée, on soumet les faces extérieures des parois frontales à un traitement préalable avec un liquide qui, outre un effet de gonflement rapide, assure également la solidification de cette matière première.

2. Procédé suivant la revendication 1, caractérisé en ce que la matière (1) est rendu incombustible après traitement avec le liquide.

3. Procédé suivant la revendication 2, caractérisé en ce que, comme liquide, on utilise un sol de silice.

4. Procédé suivant la revendication 1, caractérisé en ce que les parois frontales sont réalisées en une matière première absorbante.

5. Procédé suivant la revendication 4, caractérisé en ce que, à partir de la matière première absorbante, on forme des pièces moulées qui entourent les câbles tandis que, dans les espaces vides subsistant, on introduit des pièces réalisées avec la même matière première.

6. procédé suivant la revendication 2, caractérisé en ce qu'on utilise le composant liquide de la masse de coulée pour imprégner les parois frontales.

7. Procédé suivant la revendication 1, caractérisé en ce qu'on introduit un composant de la masse de coulée dans la matière au cours de sa fabrication.

8. Procédé suivant la revendication 7, caractérisé en ce que le composant sec de la masse de coulée est disséminé dans la matière première.

9. Procédé suivant la revendication 1, caractérisé en ce que, comme matière première, on utilise de la viscose que l'on comprime sous des pressions différentes dans des directions mutuellement perpendiculaires.

10. Procédé suivant la revendication 9, caractérisé en ce qu'on utilise la matière première en longueurs prédéterminées, des découpes étant formées à la manière de peignes dans les pièces de matière première (1).

Fig. 1

Fig. 2

Fig. 3

Fig. 4